# EUROPÄISCHE PATENTANMELDUNG

(11) **EP 1 363 377 A2**
(43) Veröffentlichungstag der Anmeldung: **19.11.2003**
(21) Anmeldenummer: 03010757.7
(22) Anmeldetag: 14.05.2003
(51) Int. Cl.: H02H 3/12

(54) **Elektromotorischer Stellantrieb**

(30) Priorität: 14.05.2002 DE 20207507 U; 14.05.2002 DE 20207508 U; 14.05.2002 DE 20207509 U
(71) Anmelder: Dewert Antriebs- und Systemtechnik GmbH & Co. KG, 32278 Kirchlengern (DE)
(72) Erfinder: Roither, Andreas, 32130 Enger (DE); Schröder, Thomas, 49324 Melle (DE)
(74) Vertreter: Hanewinkel, Lorenz, Dipl.-Phys.

(57) **Zusammenfassung**

Elektromotorischer Stellantrieb für Niederspannungsanwendungen, insbesondere Möbelantrieb, mit mindestens einem Antrieb (2), einer Steuereinheit (30), mindestens einer Handbedienung (4-6), einer räumlich vom Antrieb (2) getrennten und mit Verbindungskabeln (10, 11) am Antrieb (2) angeschlossenen Versorgungseinheit (3), die mindestens eine netzabhängige Spannungsquelle (12) und eine netzunabhängige Spannungsquelle (16) aufweist, wobei die Versorgungseinheit (3) mit einer Verbindungseinheit (17) ausgerüstet ist und mit den Antrieben (2) über Verbindungsleitungen (10, 11) verbunden ist.

## Beschreibung

Die Erfindung betrifft einen elektromotorischen Stellantrieb für Niederspannungsanwendungen, insbesondere Möbelantrieb, mit mindestens einem Antrieb, einer Steuereinheit, mindestens einer Handbedienung, einer räumlich vom Antrieb getrennten und mit Verbindungskabeln am Antrieb angeschlossenen Versorgungseinheit, die mindestens eine netzabhängige Spannungsquelle und eine netzunabhängige Spannungsquelle aufweist.

Elektromotorische Stellantriebe mit Niederspannungsmotoren und räumlich von den Antrieben getrennten Versorgungseinheiten sind seit langem für Möbel wie zum Beispiel verstellbare Betten im Hospital-, und Pflegebereich, Behandlungsstühle, u.dgl. bekannt. Zum Einsatz im Wohnbereich, beispielsweise für Doppelbetten sind die bekannten Maßnahmen aus dem Hospital- und Pflegebereich jedoch zu umfangreich, aufwendig und unwirtschaftlich.

Die DE 201 10 841 U1 offenbart einen elektromotorischen Stelltrieb mit einer räumlich von der Steuereinheit getrennten Stromversorgungsbaueinheit. Als nachteilig hat sich hierbei erwiesen, dass eine benötigte Variabilität insbesondere bei der Verwendung mehrerer und unterschiedlicher Antriebe und Bedienelemente, wie es für den Einsatz im Wohnbereich sehr häufig vorkommt, nicht gegeben ist.

Weiterhin ist nachteilig, dass die Bedienelemente nur antriebsseitig angeschlossen werden können, wodurch die Anpassung an unterschiedliche Möbelsysteme sehr eingeschränkt ist, und dass nur Antriebe angeschlossen werden können, die mit einer internen Steuereinheit ausgerüstet sind.

Aus der DE 201 19 182 U1 ist ein gattungsgemäßer Möbelantrieb bekannt, bei dem sich jedoch als nachteilig erweist, dass eine Ansteuerung der Schalteinrichtung zur Trennung vom Netz nur durch Ablegen der Handbedienung an einer bestimmten Stelle erfolgt. Dieses kann bei nicht korrektem Auflegen dazu führen, dass keine vollständige Netztrennung erfolgt. Weiterhin ist es außerdem nachteilig, wenn die räumlich vom Antrieb getrennte Versorgungseinheit sich in Reichweite des Bedieners befinden muss, und somit ein ausreichender Abstand zu Netzspannung führenden Teilen nicht mehr gegeben ist.

Die Aufgabe der Erfindung besteht darin, einen elektromotorischen Stellantrieb mit einer räumlich vom Antrieb getrennten Versorgungseinheit so zu gestalten und zu erweitern, dass ein großer Anwendungsbereich bei verschiedensten Möbelantrieben erreicht wird, beispielsweise bei der Verwendung unterschiedlicher Bedienelemente an unterschiedlichen Positionen, eine größere Wirtschaftlichkeit bei Montage und Wartung und insbesondere in dem Fall, bei dem in einem Doppelbett zwei Doppelantriebe verwendet werden und aus wirtschaftlichen Gründen die Anordnung beispielsweise aller Versorgungs- und Steuerelemente, die in beiden Doppelantrieben vorhanden sind, in einer räumlich von den Doppelantrieben getrennten Einheit erfolgt, wobei eine Netztrennung automatisch unabhängig von der Lage der Handbedienungen erfolgt.

Diese Aufgabe wird erfindungsgemäß dadurch gelöst, dass die Versorgungseinheit mit einer Verbindungseinheit ausgerüstet ist und mit den Antrieben über Verbindungsleitungen verbunden ist.

Vorteilhafte Weiterbildungen der Erfindung sind in den Unteransprüchen enthalten.

Die Anordnung einer zentralen Anschluss- und Verbindungseinheit integriert in eine räumlich von den Antrieben getrennte Versorgungseinheit ist in vorteilhafter Weise besonders wirtschaftlich, da der Anschluss der Bedienungselemente sowohl an der Versorgungseinheit als auch an den Antrieben erfolgen kann. Hierbei können Antriebe angeschlossen werden, die keine eigene Stromversorgung z.B. in Form eines Transformators aufweisen, jedoch mit einer eigenen Steuereinheit versehen sind.

Die Verbindungseinheit bildet eine zentrale Verbindung der Funktionseinheiten, wie Schalteinrichtung für den Netzanschluss, Stromversorgung, u.dgl., der Versorgungseinheit zu den Anschlussstellen von Bedienungselementen und Antrieben. Die Handbedienungen können sowohl einzeln als auch über einen Verteiler angeschlossen werden. Weiterhin ist eine zusätzliche Anschlussmöglichkeit für Empfänger von drahtlosen Bedienelementen vorgesehen. Für den Bereitschaftsbetrieb der Empfänger ist eine Verbindung der Hilfsspannungsquelle für die Schalteinrichtung des Netzanschlusses zum Anschluss des oder der Empfänger angeordnet.

Die Schalteinrichtung für den Netzanschluss wird in bekannter Weise jedesmal aktiviert, wenn eine Antriebsfunktion über eine Handbedienung erfolgt, und zwar erst dann, wenn ein Knopfdruck erfolgt. Nach Loslassen des betätigten Knopfes wird der Netzanschluss wieder getrennt. Ein Ablegen der Handbedienung an einer bestimmten Position ist nicht erforderlich, so dass für den Bediener in vorteilhafter Weise sich ein größerer Freiraum ergibt. Er muss nicht auf die richtige Ablageposition achten.

Es ist jedoch auch möglich, Antriebe ohne eigene Stromversorgungs- und ohne eigene Steuereinheiten anzuschließen.

In einer solchen Ausführungsform sind die Steuereinheiten in der Versorgungseinheit, vorzugsweise in der Verbindungseinheit angeordnet. In diesem Falle sind die Verbindungsleitungen von der Versorgungseinheit zu den Antrieben mit einer minimalen Aderzahl ausgestattet, was besonders wirtschaftlich ist. Der Anschluss der Handbedienungen erfolgt dabei an der Versorgungseinheit.

Auch eine Sonderausführung der Steuereinheiten, bei der der Motorstrom direkt durch die Handbedienungen geleitet wird, ist in der erfindungsgemäßen Ausführung durchführbar.

In weiterer Ausgestaltung sind in der Versorgungseinheit Kontrollbausteine beispielsweise für Stromüberwachung integriert, die vorteilhaft in der Versorgungseinheit mit den Ansteuerleitungen der Schalteinrichtung für den Netzanschluss verbunden sind, womit beispielsweise eine Ausschaltung des gesamten Antriebs bei Überlast möglich wird. Weitere Funktionen sind ebenfalls denkbar.

In einer weiteren Ausführungsform sind in den Handbedienungen Schaltelemente angeordnet, mit denen die Ansteuerung der Schalteinrichtung für den Netzanschluss automatisch oder gezielt von Hand vorgenommen werden kann.

Ein anderes Ausführungsbeispiel sieht vor, dass die Ansteuerung der Schalteinrichtung für den Netzanschluss über Prüfsignale erfolgt, die von einer Kontrolleinheit dieser Schalteinrichtung bereitgestellt und über die Verbindungseinheit den Antrieben zugeführt werden. Hierbei entfallen in vorteilhafter Weise zusätzliche Adern zur Ansteuerung, da die Aktivierung der Schalteinrichtung für den Netzanschluss über eine Auswertung der Veränderungen des Prüfsignals erfolgt, die in Abhängigkeit der Betriebszustände der Antriebe verändert werden.

In einer weiteren Ausgestaltung ist hierbei vorgesehen, einen Stromfühler der Kontrolleinheit der Schalteinrichtung für den Netzanschluss mittels der Verbindungseinheit mit den Verbindungsleitungen zu den Antrieben zu verknüpfen.

Weiterhin wird vorgeschlagen, in den Bedienungsteilen Schaltelemente vorzusehen, die das Prüfsignal der Kontrolleinheit der Schalteinrichtung für den Netzanschluss verändern, wobei Prüfsignal und Schaltelemente beispielsweise gezielt auf eine bestimmte Frequenz eingestellt sind.

In einer weiteren Ausführungsform ist es möglich, für die Bedienungsteile auch Anschlussmöglichkeiten an den Antrieben vorzusehen, wobei die Antriebe jedoch keine Steuereinheiten aufweisen. Hierzu werden die Anschlusskabel der Antriebe mit zusätzlichen Steuerleitungen versehen. Dieses vergrößert vorteilhaft die Einsatzmöglichkeiten der Erfindung.

Die Verbindungseinheit weist als Verbindungselement eine gedruckte Schaltung auf, auf welcher alle Anschlüsse angeordnet sind und die somit alle Verbindungen herstellt.
In einer anderen Ausführungsform wird vorgeschlagen, die Verbindungen mittels elektrisch leitender Verbindungsteile herzustellen, bzw. elektrisch leitende Verbindungsteile in Kombination mit mindestens einer gedruckten Schaltung vorzusehen.

Eine besonders vorteilhafte Ausführungsform sieht vor, dass als Antriebe auch Antriebe mit integrierter Steuerung, wie zum Beispiel Doppelantriebe, verwendet werden können. Dabei sind die Verbindungsleitungen mit Steuerleitungen ausgerüstet. In dieser Ausgestaltung ist es außerdem von besonderem Vorteil, dass auch Doppelantriebe ohne integrierte Steuerung angeschlossen werden können, die aber jeweils mit einem Anschluss für Bedienungselemente versehen sind. Dadurch wird die Vielseitigkeit der Position der Bedienungselemente vorteilhaft vergrößert.

Besonders vorteilhaft ist, dass die Verbindungseinheit jeweils eine geeignete elektrische Absicherung für die Anschlüsse der Antriebe aufweist.

In einer weiteren Ausgestaltungsform kann die Versorgungseinheit für einen Anschluss einer externen Spannungsquelle ausgebildet sein.

In einer bevorzugten Ausführung weist die Versorgungseinheit einen Deckel für die in ihr oder in einem in ihr separat angeordnetem Fach eingebaute Spannungsquelle, beispielsweise eine Batterie, auf.

Somit ist durch die vorliegende erfindungsgemäße Ausgestaltung und Weiterbildung ein Stellantrieb mit großer Anpassungsfähigkeit an verschiedene Möbelsysteme geschaffen, wobei insbesondere eine vorteilhafte Wirtschaftlichkeit auch durch vereinfachte Montage der Antriebe am Möbel aufgrund geringeren Verkabelungsaufwandes sowie zentral angeordneter Versorgungs- und Steuerelemente erzielt wird. Weiterhin wird für den Benutzer ein erhöhter Komfort bei der Verwendung der Bedienungselemente erreicht, indem die Ablage der Bedienungselemente frei wählbar ist.

Die Erfindung wird in der nachfolgenden Beschreibung anhand der Zeichnungen noch näher erläutert. Hierbei zeigt
- Fig. 1: einen Geräteplan eines Ausführungsbeispieles eines erfindungsgemäßen Stellantriebes;
- Fig. 2: einen Geräteplan ähnlich Fig. 1 mit Blockschaltbild der Versorgungseinheit mit einer beispielhaften Schalteinrichtung;
- Fig. 3: den Geräteplan gemäß Fig. 1 mit Blockschaltbild der Versorgungseinheit mit einer weiteren beispielhaften Schalteinrichtung;
- Fig. 4: eine weitere Ausführung der Schalteinrichtung gemäß Fig. 3;
- Fig. 5: einen Geräteplan eines weiteren Ausführungsbeispieles eines erfindungsgemäßen Stellantriebes; und
- Fig. 6: einen Geräteplan gemäß Fig. 5 und ähnlich Fig. 3 mit Blockschaltbild der Versorgungseinheit mit einer beispielhaften Schalteinrichtung.

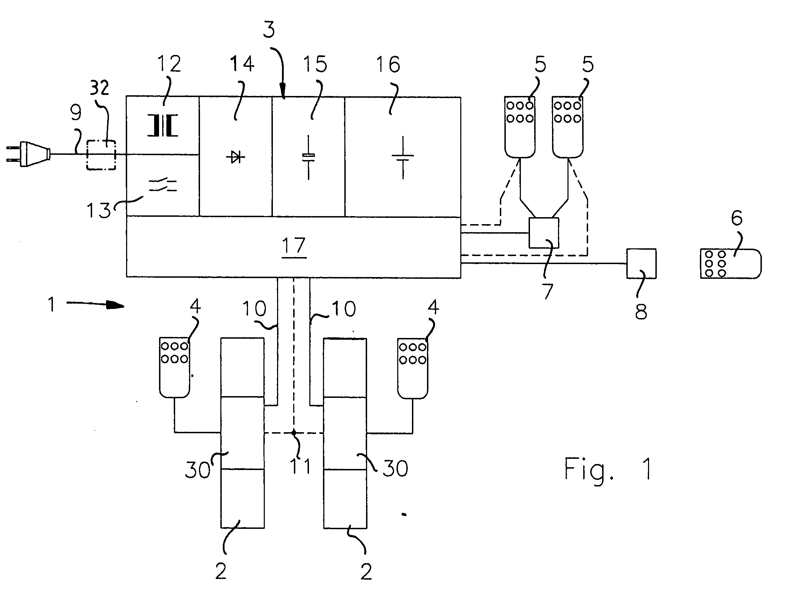

Fig. 1 zeigt anhand eines schematisierten Geräteplanes die Anordnung eines beispielhaften Stellantriebes 1, insbesondere für Möbel beispielsweise für zwei Betten. Der Stellantrieb 1 besteht aus zwei bekannten Antrieben 2, beispielsweise Doppelantrieben, einer davon räumlich getrennten ebenfalls bekannten Versorgungseinheit 3 und Handbedienungen 4, von denen je eine an einem Antrieb 2 angeschlossen ist.

Die Antriebe 2 beinhalten bekannte Steuereinheiten 30 für die Motoren wie z.B. Relais u.dgl., sowie jeweils einen Anschluss für eine Handbedienung 4, jedoch keine interne Spannungsquelle. In einer Minimalausführung ist nur ein Antrieb 2 mit nur einem Motor mit der Versorgungseinheit 3 verbunden. Es können jedoch auch mehr Antriebe 2 als dargestellt in erweiterten Ausführungsformen der Versorgungseinheit 3 angeschlossen werden. In einer bevorzugten Ausführungsform sind dies zwei Antriebe 2.

Die Versorgungseinheit 3 umfasst in der dargestellten bekannten Ausführung eine Spannungsquelle 12, zum Beispiel einen Transformator, der vom Netz über einen Netzanschluss 9, der hier beispielhaft in Form eines Kabels mit Netzstecker dargestellt ist, gespeist wird. Diese Spannungsquelle 12 kann auch als Ringkerntransformator mit vorteilhaften niedrigen Leerlaufverlusten ausgebildet sein oder einen elektronischen Transformator beinhalten.

Andere bekannte Ausführungen des Netzanschlusses 9 sind ebenfalls möglich.

In einer bevorzugten Ausführungsform ist der Netzanschluss 9 in Form einer geeigneten Steckverbindung ausgebildet, welche für einen weltweiten Einsatz vorteilhaft ist.

Weiterhin enthält die Versorgungseinheit 3 eine Schalteinrichtung 13, die weiter unten näher beschrieben wird. Sie dient zur Trennung der Versorgungseinheit 3 vom Netzanschluss 9 während der Stillstandzeiten der Antriebe 2.

Eine netzunabhängige Spannungsquelle 16, eine Batterie oder ein Akkumulator sind als Notversorgung ebenfalls ein Bestandteil der Versorgungseinheit 3. In bevorzugter Ausgestaltung ist diese nach Öffnen eines geeigneten Deckels vorteilhaft einfach zugänglich, um einen Austausch oder eine Wartung vorzunehmen.

Im Falle von Antrieben 2 mit Gleichstrommotoren in einer bevorzugten Ausführungsform beinhaltet die Versorgungseinheit 3 weiterhin eine bekannte Gleichrichtung 14 mit Siebkondensator 15.

Die Antriebe 2 und die Versorgungseinheit 3 sind mittels Verbindungsleitungen 10 entweder einzeln oder mittels einer gemeinsamen gestrichelten Verbindungsleitung 11, die im Bereich der Antriebe 2 verzweigt, elektrisch verbunden, wobei die Verbindungsleitungen 10, 11 an der Versorgungseinheit 3 an einer Verbindungseinheit 17 angeschlossen sind.
Die Verbindungseinheit 17 stellt eine vorteilhafte Schnittstelle zwischen Versorgungseinheit 3, Schalteinrichtung 13, anzuschließenden Antrieben 2 und Bedienungselementen 5 sowie deren Komponenten 7, 8 her, indem es als eine zentrale Anschluss- und Verbindungsstelle ausgebildet ist.
Es ist vorteilhaft, dass die Anschlüsse der Antriebe 2 an der Verbindungseinheit 17 jeweils eine geeignete elektrische Absicherung aufweisen, welche nicht dargestellt ist.

Dadurch wird in einer Ausführungsform in vorteilhafter Weise ermöglicht, dass die Handbedienungen 5 nicht nur an den Antrieben 2, sondern beispielsweise auch über einen Verteiler 7 an der Verbindungseinheit 17 der Versorgungseinheit 3. angeschlossen werden. Es ist auch möglich, die Handbedienungen 5 an der Verbindungseinheit 17 einzeln anzuschließen. Ebenfalls kann eine drahtlose Übertragungsstrecke, gebildet durch einen Empfänger 8 und Handbedienungen 6, mit der Versorgungseinheit 3 verbunden werden. Hierdurch ergibt sich eine große Variationsmöglichkeit der Applikation eines Stellantriebes an unterschiedliche Möbelsysteme.

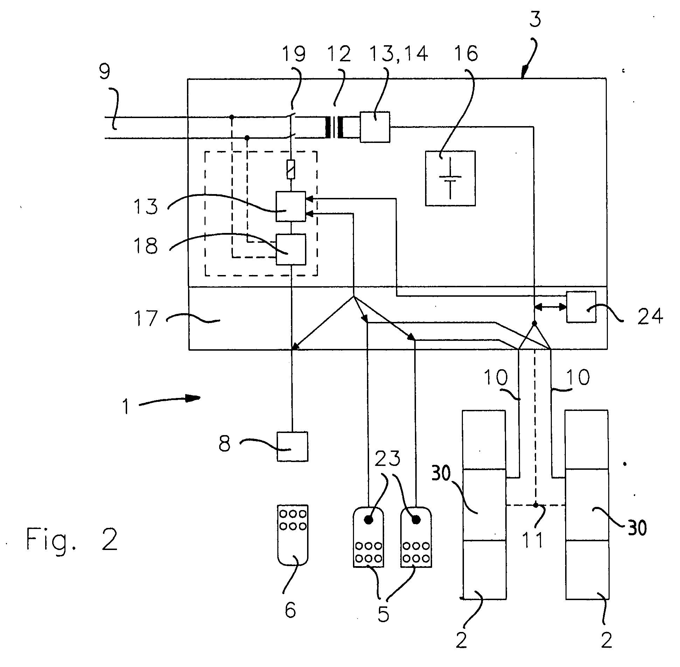

Fig. 2 stellt ein Ausführungsbeispiel der Versorgungseinheit 3 mit einer Schalteinrichtung 13 in einem Blockschaltbild dar, wobei Handbedienungen 5 getrennt von den Antrieben 2 an der Verbindungseinheit 17 angeschlossen sind.
Die Schalteinrichtung 13 dient zur Trennung der Versorgungseinheit 3 vom Netzanschluss 9 während der Stillstandzeiten der Antriebe 2. In einer bekannten Ausführung der Schalteinrichtung 13 wird diese von einer Hilfsspannungsquelle 18 aus dem Netz versorgt und betätigt ein Schaltmittel 19, beispielsweise ein Relais mit zwei Kontakten, welches den Netzanschluss 9 mit der Spannungsquelle 12 verbindet, wenn eine Antriebsfunktion mittels Handbedienung 5 aktiviert wird.

Zur Verbindung der Schalteinrichtung 13 mit den anzuschließenden Komponenten weist die Verbindungseinheit 17 geeignete Verbindungsmittel beispielsweise eine gedruckte Schaltung in Form einer Leiterplatte auf.

Zusätzliche Kabeladern zur Ansteuerung der Schalteinrichtung 13 innerhalb der Verbindungsleitungen 10, 11 können vorteilhaft entfallen.

In weiterer Ausgestaltung weisen die Handbedienungen 5 zusätzliche Schaltelemente 23 zur Aktivierung der Schalteinrichtung 13 auf. Diese können beispielsweise als Drucktaster oder als durch einen Magnet aktivierbare Schaltelemente ausgebildet sein. Hiermit wird eine besonders vorteilhafte Zugangssicherung des Stellantriebes 1 ermöglicht. Weiterhin ist es denkbar, dass die Verbindungseinheit 17 eine Kontrolleinheit 24 aufweist, beispielsweise einen Überlastschutz in Art einer Stromüberwachung, der die Schalteinrichtung 13 bei Überlast deaktiviert und somit die Stromzufuhr unterbindet.

Die Verbindungseinheit 17 ermöglicht es auch, Empfänger 8 für drahtlose Fernbedienung in Form einer Handbedienung 6 anzuschließen.

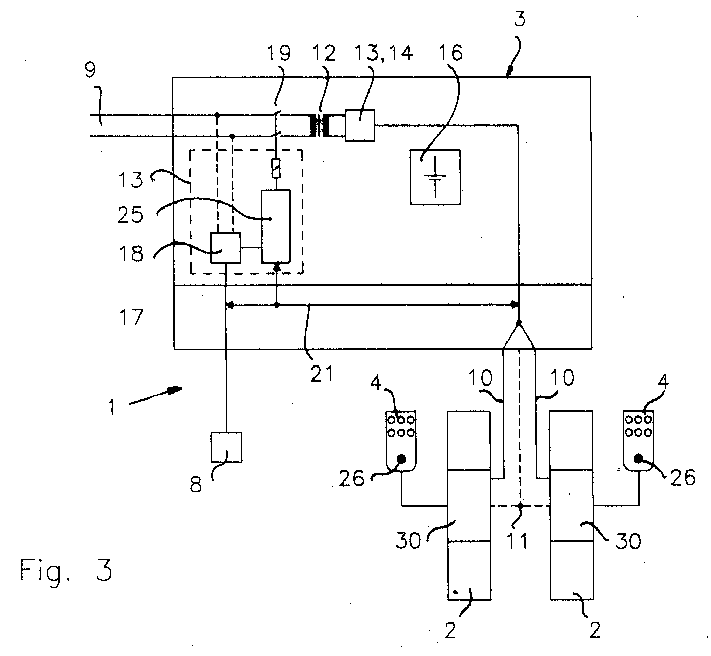

Fig. 3 stellt ein Ausführungsbeispiel der Versorgungseinheit 3 mit einer weiteren Ausgestaltung der Schalteinrichtung 13 in einem Blockschaltbild dar. Hierbei handelt es sich um eine besonders vorteilhafte Anordnung, da die Verbindungsleitungen 10, 11 zur Ansteuerung der Schalteinrichtung 13 keine zusätzlichen Adern benötigen, wobei die Handbedienungen 4 sich auch an den Antrieben 2 befinden können.

Die Schalteinrichtung 13 weist zusätzlich zur Hilfsspannungsquelle 18 eine Kontrolleinheit 25 auf, welche nicht nur das Schaltmittel 19 betätigt, sondern ein Prüfsignal generiert. Dieses Prüfsignal ist in der Verbindungseinheit 17 mittels Prüfleitungen 21 an den Verbindungsleitungen 10, 11 zu den Antrieben 2 angeschlossen, so dass es während der Zeit, in der die Antriebe 2 nicht aktiviert sind, auch immer vorhanden ist.

Bei Betätigung einer Handbedienung 4 wird zunächst das Prüfsignal in Form und Größe verändert. Diese Änderung wird von der Kontrolleinheit 25 ausgewertet, indem das Schaltmittel 19 aktiviert wird, wobei der Netzanschluss 9 mit der Spannungsquelle 12 verbunden wird und die gewünschte Antriebsfunktion ausgeführt wird. Bei Beendigung der Antriebsfunktion nimmt das Prüfsignal seine ursprüngliche Form und Größe wieder an und veranlasst damit die Kontrolleinheit 25 zur Deaktivierung des Schaltmittels 19, welches die Spannungsquelle 12 wieder vom Netzanschluss 9 trennt.
Das Prüfsignal und die Kontrolleinheit 25 sind vorteilhaft so ausgelegt, dass die Betriebszustände der Antriebe 2 eindeutig durch die Veränderungen des Prüfsignals detektiert und ausgewertet werden können.

In weiterer Ausgestaltung weisen auch die Handbedienungen 4 zusätzliche Schaltelemente 26 zur Aktivierung dieser Schalteinrichtung 13 auf. Die Schaltelemente 26 sind beispielsweise als elektronische Resonatoren oder Schwingkreise ausgebildet, wodurch das Prüfsignal der Kontrolleinheit 25 der Schalteinrichtung 13 beim Betätigen der Handbedienung 4 gezielt beeinflusst wird, so dass ein Ein- bzw. Ausschaltvorgang der Schaltmittel 19 durch die Schalteinrichtung 13 ausgelöst wird. Hiermit ist es besonders vorteilhaft möglich, ein vereinfachtes Prüfsignal mit vereinfachter Auswertung in der Kontrolleinheit 25 zu verwenden, beispielsweise ein Prüfsignal mit einer bestimmten Frequenz, auf die die Schaltelemente 26 abgestimmt sind.

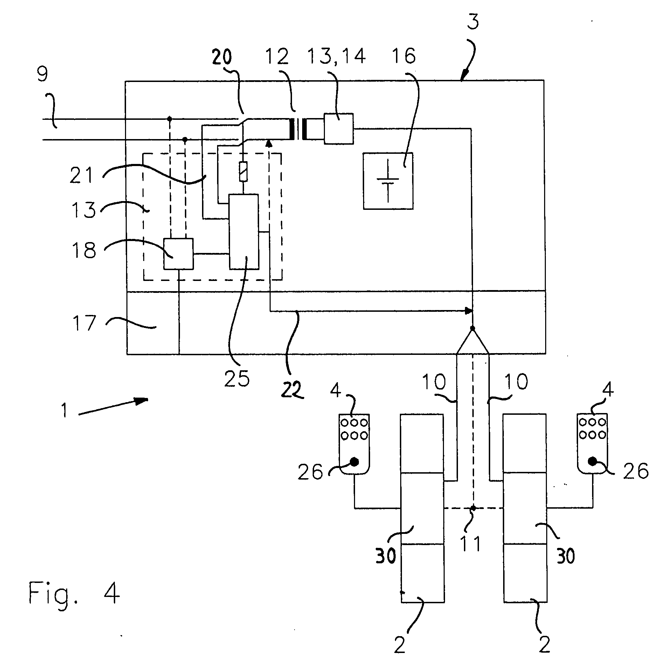

Fig. 4 stellt ein Ausführungsbeispiel der Versorgungseinheit 3 mit einer weiteren Ausgestaltung der Schalteinrichtung 13 ähnlich wie in Fig. 3 in einem Blockschaltbild dar.
Die Einspeisung des Prüfsignals wird mittels der Prüfleitungen 21 über Umschaltkontakte eines Schaltmittels 20 in die Eingangsseite der Spannungsquelle 12 vorgenommen. Bei Betätigen einer Handbedienung 4 wird das Prüfsignal verändert und der oben unter Fig. 2 beschriebene Vorgang findet statt. Beim Ausschalten des Antriebs kann dieses zusätzlich über einen Stromsensor 22, primär oder sekundär erfasst und der Kontrolleinheit 25 zur Auswertung zugeführt werden. Der primäre Anschluss des Stromsensors 22 ist gestrichelt gezeichnet.

Auch in dieser Ausführung kann vorteilhaft zur Vereinfachung der Auswertung des Prüfsignals durch die Kontrolleinheit 25 der Einsatz von Schaltelementen 26 in den Handbedienungen 4 erfolgen.

In einer weiteren Ausführungsform sind die Schaltelemente 26 als aktive Signalgeber ausgebildet, wobei beim Betätigen der Handbedienungen 4 die Schaltelemente 26 ein Signal aussenden, welches über die Prüfleitungen 21 der Kontrolleinheit 25 zur Auswertung zugeleitet wird. Hierbei ist vorteilhaft, dass das Prüfsignal nur bei Betrieb des Antriebs 2 generiert wird, da dadurch eine Reduzierung des Energieverbrauches der in Bereitschaft stehenden Schaltungen erfolgt.

Die Verbindungseinheit 17 ermöglicht es auch in den in Fig. 3 und 4 gezeigten Ausführungsformen Empfänger 8 für drahtlose Fernbedienung anzuschließen. In diesem Falle sind die Verbindungsleitungen 10, 11 mit zusätzlichen Steuerleitungen versehen.

In einer weiteren Ausgestaltung ist die Hilfsspannungsquelle 18 so ausgelegt, dass sie als Stromversorgung für den Bereitschaftsbetrieb von Schaltungskomponenten wie zum Beispiel Empfänger 8 ebenfalls geeignet ist.

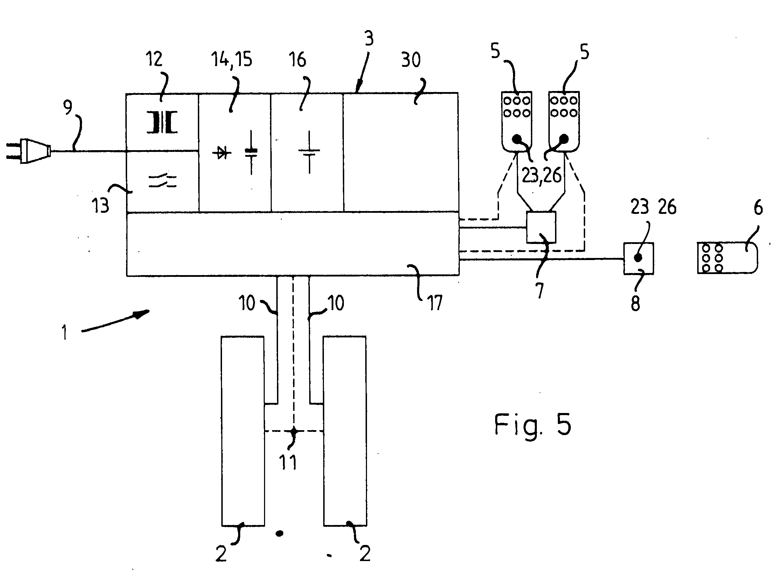

Fig. 5 zeigt anhand eines schematisierten Geräteplanes die Anordnung eines beispielhaften Stellantriebes 1, insbesondere für Möbel, beispielsweise für zwei Betten. Der Stellantrieb 1 besteht aus zwei bekannten Antrieben 2, vorzugsweise Doppelantrieben, der davon räumlich getrennten ebenfalls bekannten Versorgungseinheit 3 und Handbedienungen 5, die an der Verbindungseinheit 17 der Versorgungseinheit 3 angeschlossen sind.

Weiterhin sind in der Verbindungseinheit 17 auch alle Steuerelemente in einer Steuereinheit 30 für die anzuschließenden Antriebe 2 angeordnet. In vorteilhafter Weise ergibt sich dadurch, dass die Verbindungsleitungen 10, 11 jeweils keine Steuerleitungen beinhalten und nur zur Spannungsversorgung der Motoren der Antriebe 2 dienen.

Die Antriebe 2 beinhalten keine Steuereinheiten und keine internen Spannungsquellen.

In einer Minimalausführung ist nur ein Antrieb 2 mit nur einem Motor mit der Versorgungseinheit 3 über die Verbindungseinheit 17 verbunden. Es können jedoch auch mehr Antriebe 2 als dargestellt in erweiterten Ausführungsformen der Versorgungseinheit 3 über die Verbindungseinheit 17 angeschlossen werden.

Weiterhin enthält die Versorgungseinheit 3 eine Schalteinrichtung 13 mit dem weiter oben beschriebenen Zweck. Ihre Ansteuerung in einer ersten bekannten Ausführung durch die Handbedienungen 5 beziehungsweise durch den Empfänger 8 erfolgt innerhalb der Verbindungseinheit 17, so dass zusätzliche Kabeladern innerhalb der Verbindungsleitungen 10, 11 vorteilhaft entfallen.

Somit handelt es sich bei den Verbindungsleitungen 10, 11 nur um die Stromversorgungsleitungen der Motoren der Antriebe 2.

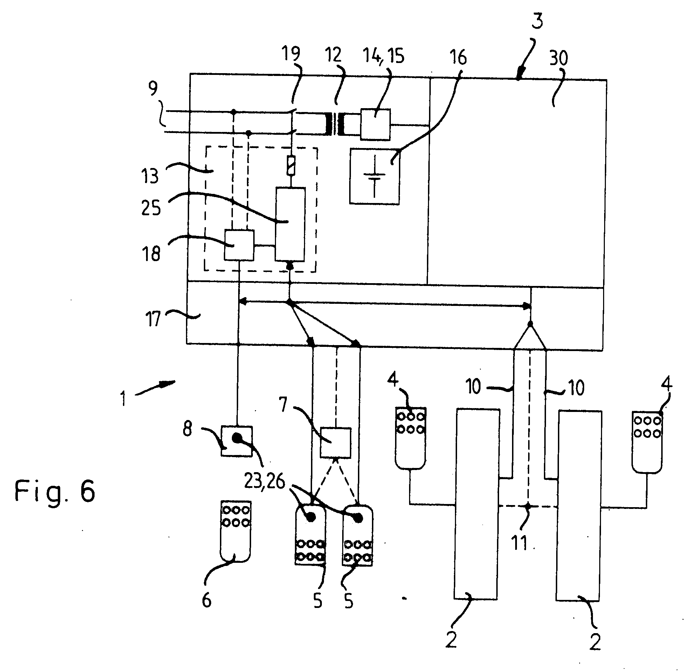

Fig. 6 stellt einen Geräteplan gemäß Fig. 5 mit Blockschaltbild der Versorgungseinheit 3 mit der Schalteinrichtung 13 nach Fig. 3 dar, deren Funktion weiter oben bereits beschrieben ist.
Im Unterschied zu Fig. 5 wird hierbei vorgeschlagen, für die Handbedienungen 4 auch Anschlussmöglichkeiten an den Antrieben 2 vorzusehen, wobei die Antriebe 2 jedoch keine Steuereinheiten aufweisen. Hierzu werden die Anschlusskabel 10, 11 der Antriebe mit zusätzlichen Steuerleitungen versehen. Dadurch ergibt sich eine weitere vorteilhafte Ergänzung der Einsatzmöglichkeiten.

Die Verbindungseinheit 17 stellt innerhalb der Versorgungseinheit 3 die Verbindungen zwischen der Ansteuerung der Schalteinrichtung 13, den Spannungsquellen 12, 16, 18, der Steuereinheit 30 und den Anschlüssen zu den Bedienungselementen 4, 5, 8 und zu den Antrieben 2 her.

Innerhalb der Versorgungseinheit 3 und der Verbindungseinheit 17 werden diese Verbindungen mittels geeigneter Verbindungen wie zum Beispiel Leiterplatte(n) und/oder elektrisch leitender Verbindungselemente hergestellt.

Die Versorgungseinheit 3 ist in einer weiteren Ausführungsform vorteilhaft mit einem Anschluss für eine externe Spannungsquelle 32, zum Beispiel ein Beistelltransformator, ausgerüstet, so dass sich eine besondere Anpassungsfähigkeit ergibt.

In einer weiteren Ausführungsform ist die Versorgungseinheit 3 so aufgebaut, dass die Antriebe 2 auch in einer Ausgestaltung als Doppelantrieb mit eingebauter Steuereinheit 30 angeschlossen werden können, wobei Handbedienungen 4, angeschlossen an den Antrieben 2, verwendet werden können. Somit ergibt sich eine besonders vorteilhafte Vielseitigkeit. Hierbei sind die Verbindungsleitungen 10, 11 zusätzlich mit Steuerleitungen versehen.

Außerdem ist somit in besonders vorteilhafter Weise möglich, dass die Antriebe 2 auch ohne Steuereinheiten 30 ausgestaltet sind, wobei sie jedoch eine Anschlussmöglichkeit für die Handbedienungen 4 aufweisen.

Denkbar ist auch, dass die Doppelantriebe mit nur einem Motor ausgerüstet sind und eine Funktion als Einzelantriebe besitzen. Ebenfalls ist der Einsatz von Einzelantrieben möglich.

### Bezugszeichenliste

- 1: Stellantrieb
- 2: Antrieb
- 3: Versorgungseinheit
- 4: Handbedienung
- 5: Handbedienung
- 6: Handbedienung
- 7: Verteiler
- 8: Empfänger
- 9: Netzanschluss
- 10: Verbindungsleitung
- 11: Verbindungsleitung
- 12: Spannungsquelle
- 13: Schalteinrichtung
- 14: Gleichrichtung
- 15: Siebkondensator
- 16: Spannungsquelle
- 17: Verbindungseinheit
- 18: Hilfsspannungsquelle
- 19: Schaltmittel
- 20: Schaltmittel
- 21: Prüfleitung
- 22: Stromsensor
- 23: Schaltelement
- 24: Kontrolleinheit
- 25: Kontrolleinheit
- 26: Schaltelement
- 30: Steuereinheit
- 32: Spannungsquelle

## Patentansprüche

1. Elektromotorischer Stellantrieb für Niederspannungsanwendungen, insbesondere Möbelantrieb, mit mindestens einem Antrieb (2), einer Steuereinheit (30), mindestens einer Handbedienung (4-6), einer räumlich vom Antrieb (2) getrennten und mit Verbindungskabeln (10, 11) am Antrieb (2) angeschlossenen Versorgungseinheit (3), die mindestens eine netzabhängige Spannungsquelle (12) und eine netzunabhängige Spannungsquelle (16) aufweist, **dadurch gekennzeichnet, dass** die Versorgungseinheit (3) mit einer Verbindungseinheit (17) ausgerüstet ist und mit den Antrieben (2) über Verbindungsleitungen (10, 11) verbunden ist.

2. Elektromotorischer Stellantrieb nach Anspruch 1, **dadurch gekennzeichnet, dass** der Stellantrieb (1) eine Schalteinrichtung (13) mit Hilfsspannungsquelle (18) zur Trennung der netzabhängigen Spannungsquelle (12) von einem Netzanschluss (9) aufweist

3. Elektromotorischer Stellantrieb nach Anspruch 1 oder 2, **dadurch gekennzeichnet, dass** die Verbindungseinheit (17) eine zentrale Anschluss- und Verbindungsstelle zwischen Bedienungselementen (5-8), Antrieben (2), Versorgungseinheit (3) und Schalteinrichtung (13) bildet.

4. Elektromotorischer Stellantrieb nach einem oder mehreren der Ansprüche 1 bis 3, **dadurch gekennzeichnet, dass** die Verbindungseinheit (17) eine Kontrolleinheit (24) zur Überwachung von sicherheitsrelevanten Parametern wie Stromstärke und/oder Temperatur aufweist.

5. Elektromotorischer Stellantrieb nach einem oder mehreren der Ansprüche 2 bis 4, **dadurch gekennzeichnet, dass** die Hilfsspannungsquelle (18) der Schalteinrichtung (13) ausreichend zur gleichzeitigen Versorgung von Stand-By Komponenten ausgelegt ist und über die Verbindungseinheit (17) mit den entsprechenden Anschlüssen verbunden ist.

6. Elektromotorischer Stellantrieb nach einem oder mehreren der Ansprüche 2 bis 5, **dadurch gekennzeichnet, dass** die Verbindungseinheit (17) für die Ansteuersignale der Schalteinrichtung (13) die Verbindung zu den Bedienungselementen (4-8) ausbildet.

7. Elektromotorischer Stellantrieb nach einem oder mehreren der Ansprüche 2 bis 6, **dadurch gekennzeichnet, dass** die Ansteuerung der Schalteinrichtung (13) über Schaltelemente (23) erfolgt.

8. Elektromotorischer Stellantrieb nach einem oder mehreren der Ansprüche 2 bis 5, **dadurch gekennzeichnet, dass** die Verbindungseinheit (17) für die Prüfsignale der Schalteinrichtung (13) die Verbindung zu den Verbindungsleitungen (10, 11) und Bedienungselementen (4-8) ausbildet.

9. Elektromotorischer Stellantrieb nach Anspruch 8, **dadurch gekennzeichnet, dass** die Verbindung des Stromfühlers (22) für eine Kontrolleinheit (25) der Schalteinrichtung (13) zu den Verbindungsleitungen (10, 11) der Antriebe (2) in der Verbindungseinheit (17) erfolgt.

10. Elektromotorischer Stellantrieb nach einem oder mehreren der Ansprüche 8 bis 9, **dadurch gekennzeichnet, dass** Schaltelemente (26) in den Bedienelementen (4), den Empfängern (8) und/oder in der Verbindungseinheit (17) angeordnet sind, die das Prüfsignal der Kontrolleinheit (25) der Schalteinrichtung (13) beeinflussen.

11. Elektromotorischer Stellantrieb nach einem oder mehreren der Ansprüche 8 bis 9, **dadurch gekennzeichnet, dass** die Prüfsignale der Schalteinrichtung (13) in Abhängigkeit von den Betriebszuständen des Antriebs (2) verändert werden und dass gemäß dieser Veränderungen ein Schaltsignal für die Schaltmittel (19, 20) von der Kontrolleinheit (25) der Schalteinrichtung (13) erzeugt wird.

12. Elektromotorischer Stellantrieb nach einem oder mehreren der Ansprüche 1 bis 9, **dadurch gekennzeichnet, dass** die Verbindungen in der Verbindungseinheit (17) mittels mindestens einer gedruckten Schaltung und/oder mittels elektrisch leitender Verbindungsteile gebildet werden.

13. Elektromotorischer Stellantrieb nach einem oder mehreren der Ansprüche 1 bis 12, **dadurch gekennzeichnet, dass** die Verbindungseinheit (17) jeweils eine geeignete elektrische Absicherung für die Anschlüsse der Antriebe 2 aufweist.

14. Elektromotorischer Stellantrieb nach einem oder mehreren der Ansprüche 1 bis 13, **dadurch gekennzeichnet, dass** die Versorgungseinheit (3) für einen Anschluss einer externen Spannungsquelle (32) ausgebildet ist.

15. Elektromotorischer Stellantrieb nach einem oder mehreren der Ansprüche 1 bis 14, **dadurch gekennzeichnet, dass** die Versorgungseinheit (3) mit einem Deckel für die in ihr oder in einem in ihr separat angeordnetem Fach eingebaute Spannungsquelle (16) versehen ist.

16. Elektromotorischer Stellantrieb nach einem oder mehreren der Ansprüche 1 bis 15, **dadurch gekennzeichnet, dass** die Verbindungseinheit (17) zusätzlich alle Steuereinheiten (30) mit oder ohne Anschlüsse für die zugehörigen Handbedienungen (4-6) und Anschlüsse für Steuerleitungen zu den anschließbaren Antrieben (2) beinhaltet.

17. Elektromotorischer Stellantrieb nach Anspruch 16, **dadurch gekennzeichnet, dass** die Antriebe (2) als Doppelantriebe ohne interne Steuereinheit (30) ausgebildet sind und jeweils einen Anschluss für eine Handbedienung (4) aufweisen.
